Europäisches Patentamt

**European Patent Office**

Office européen des brevets

(19)

(11) Veröffentlichungsnummer: **0 056 450**
**B1**

(12) # EUROPÄISCHE PATENTSCHRIFT

(45) Veröffentlichungstag der Patentschrift:
**27.03.85**

(51) Int. Cl.⁴: **B 60 T 13/68**

(21) Anmeldenummer: **81109389.7**

(22) Anmeldetag: **30.10.81**

(54) **Elektropneumatischer Wandler.**

(30) Priorität: **20.01.81 DE 3101607**

(43) Veröffentlichungstag der Anmeldung:
**28.07.82 Patentblatt 82/30**

(45) Bekanntmachung des Hinweises auf die Patenterteilung:
**27.03.85 Patentblatt 85/13**

(84) Benannte Vertragsstaaten:
**AT CH DE FR GB LI**

(56) Entgegenhaltungen:
**FR - A - 990 138**
**FR - A - 1 157 190**
**FR - A - 1 212 280**
**FR - A - 2 127 957**
**GB - A - 1 174 243**
**GB - A - 1 287 918**
**US - A - 3 724 912**
**US - A - 3 945 401**

(73) Patentinhaber: **Knorr-Bremse GmbH, Moosacher Strasse 80, D-8000 München 40 (DE)**

(72) Erfinder: **Stäuble, Georg, Zittauer Strasse 20, D-8000 München 50 (DE)**
Erfinder: **Wieser, Tiberius, Riesstrasse 82, D-8000 München 50 (DE)**

BUNDESDRUCKEREI BERLIN

## Beschreibung

Die Erfindung bezieht sich auf einen elektropneumatischen Wandler gemäß dem Oberbegriff des Anspruches 1. Ein Wandler der vorstehenden Art ist durch die FR-A-1 157 190 bekannt.

Es sind Wandler mit einem Druckraum, einer Ein- und einer Auslaßdüse bekannt, wobei der Druckraum über die Einlaßdüse aus einer Druckluftquelle ständig belüftet wird. Auf die Auslaßdüse drückt ein Magnet mit stromproportionaler Kraft ein Absperrelement, um dadurch im Druckraum einen ebenfalls stromproportionalen Staudruck zu bilden.

Derartige bekannte Wandler arbeiten mit geringen Stellkräften und haben gute Regeleigenschaften, nachteilig ist jedoch der ständige Luftverbrauch über die Auslaßdüse, der die Verwendbarkeit solcher Wandler auf eine kleine pneumatische Leistung und ein niedriges Druckniveau (bis ca. 1 bar) begrenzt.

Es sind auch elektropneumatische Wandler jeweils mit einem Hubmagneten, Drehmagneten oder dgl. bekannt, der mit einer stromproportionalen Kraft auf einen Kolben wirkt, der mit einem Doppelventil funktionell verbunden ist (FR-A-1 157 190).

Nachteilig ist bei diesen Wandlern, daß zur Betätigung des Doppelventils relativ große Kräfte benötigt werden. Entsprechend groß ist auch die Unempfindlichkeit des Wandlers in dem Bereich, in dem weder der Be- noch der Entlüfter des Doppelventils betätigt ist. Höhere Ansprüche an Empfindlichkeit können nur durch Erhöhung der Magnetkraft erfüllt werden. Dieser Weg führt jedoch zu größeren Magneten mit hohem elektrischen Leistungsbedarf, d. h., zu schweren und teueren Konstruktionen.

Aufgabe der Erfindung ist es, einen elektropneumatischen Wandler der eingangs genannten Art anzugeben, der bei geringen Stellkräften gute Regeleigenschaften aufweist, ohne daß eine ständige Undichtheit mit ständigem Luftverbrauch vorhanden ist. Der neue E/P-Wandler soll damit nicht auf kleine pneumatische Leistungen und ein niedriges Druckniveau beschränkt sein. Aufgrund der relativ geringen Stellkräfte, die von dem Elektromagneten des neuen Wandlers aufgebracht werden müssen, sollen besonders einfache und billige Konstruktionen ermöglicht sein.

Die Aufgabe wird erfindungsgemäß mit den kennzeichnenden Merkmalen des Anspruches 1 gelöst. Vorteilhafte Ausführungen und Weiterbildungen der Erfindung ergeben sich aus den Merkmalen der Unteransprüche.

In der Zeichnung sind in schematischer Darstellung zwei Ausführungsbeispiele dargestellt. Hierin zeigt

Fig. 1 einen elektropneumatischen Wandler gemäß der Erfindung beispielsweise für eine Druckluftbremse,

Fig. 2 ein Diagramm des erfindungsgemäßen Wandlers nach Fig. 1,

Fig. 3 einen elektropneumatischen Wandler gemäß der Erfindung beispielsweise für eine Federspeicherbremse und

Fig. 4 ein Diagramm des erfindungsgemäßen Wandlers nach Fig. 3.

Der elektropneumatische Wandler (E/P-Wandler) für eine Druckluftbremse enthält einen vergleichsweise kleinen Proportionalmagneten 1. Hierbei kann es sich um einen an sich bekannten Hub-, Dreh-, Tauchspulmagnet oder dgl. handeln. Der Anker 2 des Magneten 1 wirkt auf einen Stößel 3, der durch einen Druckraum 4 geführt ist, welcher einseitig mit einer Membran 5 verschlossen ist. Der Stößel 3 ist druckdicht durch die Membran 5 geführt und mit dieser fest verbunden. Dabei stützt sich der Stößel auf einem Schaltglied 6 ab, das zum Beispiel als eine dünne Scheibe ausgebildet sein kann. Hierzu kann die Scheibe eine nicht dargestellte zentrale Öffnung aufweisen und der Stößel kann einen nicht dargestellten Absatz enthalten, der sich auf dem Öffnungsrand abstützt, während eine Verlängerung 7 des Stößels 3 mit reduziertem Durchmesser durch die Öffnung der Scheibe hindurchgeführt ist. Das Ende der Stößelverlängerung 7 ist mit einer Membran 8 verbunden, die einen weiteren Druckraum 9 einseitig abschließt. Die Membranen 5 und 8 können auch Kolben sein.

Während der Druckraum 4 mit einer pneumatischen Leitung 10 verbunden ist, an die Druckluft von unterschiedlicher Druckhöhe angeschlossen ist, ist der Druckraum 9 mit einer weiteren Leitung 11 verbunden, an die eine Druckluftquelle von im wesentlichen konstanter Höhe angeschlossen ist. Der Druckraum 9 kann auch durch eine mechanische Feder ersetzt sein, auf der sich die Stößelverlängerung 7 abstützt.

Zu beiden Seiten des scheibenförmigen Schaltgliedes 6 ist je ein Auslaßventil 12, 13 angeordnet, das von einer Kugel 14 bzw. 15 abgeschlossen werden kann. Die beiden Auslaßventile 12, 13 sind ortsfest angeordnet und weisen jeweils etwa den gleichen Abstand von dem Stößel 3 bzw. der Stößelverlängerung 7 auf, die gegenüber den beiden Ventilen eine zentrale Lage einnehmen. Außermittig stützt sich an dem Schaltglied eine Feder 16 ab, die im Ruhezustand, also ohne daß auf dem Anker bzw. dem Stößel eine Stellkraft einwirkt, das Schaltglied elastisch in einer Schließstellung gedrückt hält, in der die beiden Auslaßventile 12, 13 durch ihre Kugeln 14, 15 verschlossen gehalten sind. Die beiden Kugeln 14, 15 werden dabei durch das Schaltglied in ihre Schließstellungen gedrückt, wobei durch die Feder 16 auf das Schaltglied ein Moment einwirkt, daß das mittig durch den Stößel fixierte Schaltglied entgegen dem Uhrzeigersinn aus einer horizontalen Lage in eine Kippstellung zu drehen sucht, in dem das Zentrum des Schaltgliedes als Schwenkpunkt um die Achse des Stößels 3 wirkt.

Es ist ohne weiteres klar, daß statt einer Feder 16 auch zwei Federn vorhanden sein können, die sich auf entgegengesetzten Seiten des Schaltgliedes abstützen, und die den Kugeln 14 und 15 gegenüberliegend angeordnet sein können. Es ist weiterhin klar, daß die Abstände der Auslaßventile von dem Stößel nicht gleich zu sein brauchen.

Wirkt auf den Anker 2 und damit auch auf den Stößel 3 eine Kraft in Pfeilrichtung 17 ein, die die Kraft überwiegt, welche in Pfeilrichtung 18 in entgegengesetzter Richtung auf den Stößel und den Anker einwirkt, dann wird mittig auf das Schaltglied eine in der Zeichnung von oben wirkende Kraft ausgeübt, derzufolge das Schaltglied entgegen der Kraft der Feder 16 im Uhrzeigersinn verschwenkt wird, wobei die weiterhin in der Schließstellung gehaltene Kugel 14 des Auslaßventiles 12 als Schwenkpunkt für das Schaltglied dient, daß die Schließstellung der Kugel 15 zur Öffnung des Auslaßventils 13 freigibt.

Überwiegt dagegen die auf den Stößel in Pfeilrichtung des Pfeiles 18 wirkende pneumatische Kraft gegenüber der in Richtung des Pfeiles 17 wirkenden Magnetkraft des Magneten 1, so wird die Kugel 15 des Auslaßventils 13 in ihrer Schließstellung gehalten, während das Schaltglied 6 nunmehr die andere Kugel 14 zur Öffnung des Auslaßventils 12 freigibt, in dem das Schaltglied im Uhrzeigersinn verschwenkt wird, wobei jetzt aber die Kugel 15 des Auslaßventils 13 als Schwenkpunkt dient.

Sind die beiden auf dem Anker 2 bzw. dem Stößel 3 in entgegengesetzten Richtungen wirkenden Kräfte gleichgroß, dann sind beide Auslaßventile 12, 13 durch die Kraft der Feder 16 in Schließstellung gehalten. Überwiegt eine der beiden Kräfte in Pfeilrichtung 17 oder 18, dann ist eines der beiden Auslaßventile 12 oder 13 geöffnet, während das andere Auslaßventil geschlossen ist. Das jeweils in Schließstellung gehaltene Auslaßventil dient dabei als Schwenkpunkt des Schaltgliedes, das in dem Maße um das geschlossene Auslaßventil schwenkt, daß das andere Auslaßventil in Öffnungsstellung gehen kann.

Die durch Kugeln 14 und 15 verschließbaren Auslaßventile 12 und 13 in symmetrischer Anordnung zum Stößel 3 in Verbindung mit einem als dünne, runde Platte ausgebildeten Schaltglied 6, auf dem sich der Stößel nur einseitig abstützt, haben sich als besonders vorteilhaft herausgestellt. Es ist aber dem Fachmann auf dem hier vorliegenden technischen Gebiet klar, daß das Schaltglied z. B. auch als zweiarmige Wippe ausgebildet sein kann. Im übrigen müssen die beiden Auslaßventile nicht notwendigerweise auf entgegengesetzten Seiten des Schaltgliedes angeordnet sein. Es muß sich auch nicht unbedingt um Kugelventile handeln, bei denen die Kugeln gegen Federkraft in ihre Schließstellung gedrückt werden.

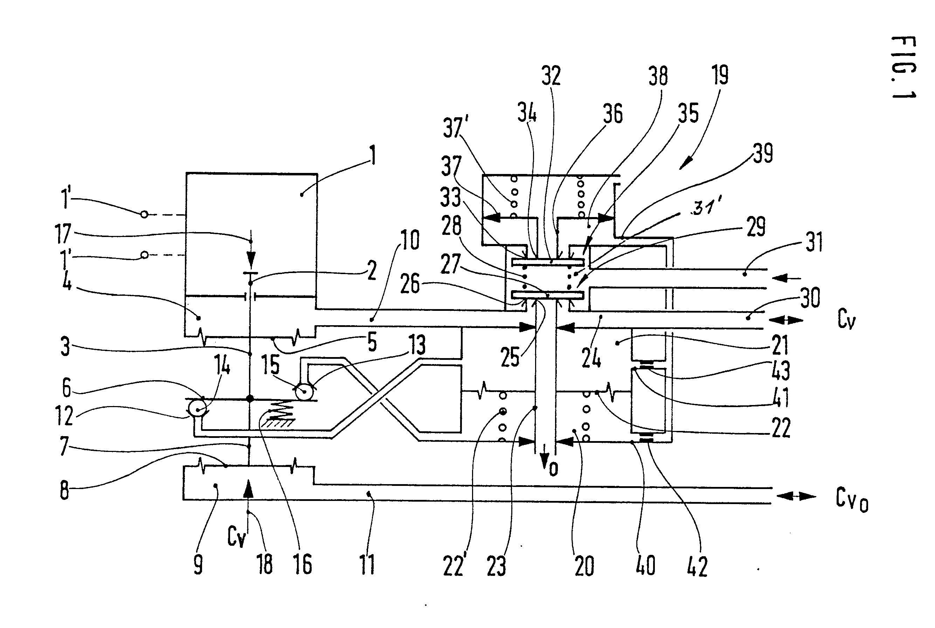

Die beiden Auslaßventile 12, 13 gehören zu einer Ventileinrichtung, die in Fig. 1 allgemein mit 19 bezeichnet ist. Diese Ventileinrichtung 19 besteht aus einer ersten und einer zweiten Kammer 20, 21, die durch eine Membran 22 voneinander getrennt sind. Die Membran 22 ist mit einem Ventilrohr 23 fest verbunden, das die beiden Kammern 20 und 21 durchdringt, und das mit seinem oberen Ende durch die Begrenzungswand der einen Kammer 21 und mit seinem unteren Ende durch die Begrenzungswand der anderen Kammer 20 druckdicht verschieblich geführt ist. Die Membran 22 kann auch ein Kolben sein.

Das obere, als Ventilsitz 25 ausgebildete Ende des Ventilrohres 23 ist durch eine dritte Ventilkammer 24 geführt und ragt in eine als Ventilsitz 26 ausgebildete Ringöffnung der Kammer 24. Die beiden Ventilsitze 25 und 26 bilden zusammen mit einer von einer Feder 28 belasteten Ventilplatte 27 ein Doppelsitzventil, das allgemein mit 29 bezeichnet ist. Die Kammer 24 ist an die pneumatische Leitung 10 angeschlossen, die zu dem vorstehend erwähnten Druckraum 4 führt. Die Kammer 24 besitzt außerdem einen Ausgang 30 zur Abgabe eines Ausgangsdrucksignals, das der elektromagnetischen Kraft des Elektromagneten 1 entspricht. Wenn das Schaltglied 6 beide Auslaßventile 12 und 13 in Abschlußstellung hält, sind die in Richtung der Pfeile 17 und 18 auf den Stößel wirkenden entgegengesetzten Kräfte gerade gleich groß. Die von der Feder 28 beaufschlagte Ventilplatte 27 befindet sich in der Kammer 31', die über eine Leitung 31 an eine nicht dargestellte Druckluftquelle angeschlossen ist. In der Kammer 31' befindet sich eine zweite Ventilplatte 32, die zusammen mit einem äußeren Ventilsitz 33 und einem inneren Ventilsitz 34 ein weiteres Doppelsitzventil 35 bildet. Dabei ist die Ventilplatte 32 ebenfalls von der Feder 28 belastet. Der innere Ventilsitz 34 gehört zu einem Ventilrohr 36 in Verbindung mit einem von einer Feder 37' belasteten Kolben 37, der in einer Kammer 38 verschieblich ist. Der Kammerabschnitt zwischen dem Kolben 37 und dem Doppelsitzventil 35 ist über eine Leitung 39 und zwei parallele Leitungsabschnitte 40 und 41 an die beiden Kammern 20 und 21 angeschlossen. In den beiden Leitungsabschnitten 40 und 41 befinden sich jeweils eine Düse 42 und 43. Das Doppelsitzventil 29 mit dem von einer gewählten Kraft der Feder 37' belasteten Kolben 37 stellt ein Druckminderventil dar, demzufolge der Druck in den Kammern 20 und 21 konstant und niedriger ist als der Druck der an die Kammer 31' angeschlossener, hier nicht dargestellten Druckluftquelle.

Der E/P-Wandler arbeitet wie folgt:

Wird der Steuerstrom für den Magneten 1 an den beiden elektrischen Anschlüssen 1' erhöht, so nimmt die auf den Anker bzw. den Stößel wirkende Kraft des Magneten entsprechend dem erhöhten Steuerstrom proportional zu. Der Stößel 3 wird zusammen mit dem auf die Membran 5 wirkenden Druck in dem Druckraum 2 und entgegen der Kraft der Feder 16 sowie entgegen dem Druck in dem Druckraum 9 nach unten verschoben. Das drehbar auf den Stößel 3 gelagerte Schaltglied 6 stützt sich auf der Kugel 14 des einen abgeschlossen gehaltenen Auslaßventils 12 ab und kompremiert die Feder 16. Die Kugel 15 des anderen Auslaßventils 13 verläßt dagegen ihren Sitz und Luft aus der Kammer 20 der Ventileinrichtung 19 strömt über das Auslaßventil 13 in die Umgebung ab. Trotz Nachspeisung von Druckluft aus der benachbarten Kammer 21 über die Leitung 39 und die Leitungsabzweigung 40 mit der eingeschalteten Düse 42 sinkt der Druck in der Kammer 20. Die Folge ist, daß das Ventilrohr 23 in Verbindung mit der Membran 22 von dem höheren Druck in der Kammer 21 nach unten verschoben wird, wodurch der Ventilsitz 25 von der Ventilplatte 27 abgehoben wird, während das äußere Ventil 26 des Doppelsitzventiles 29 geschlossen bleibt. Damit ist die Ventileinrichtung 19 auf Entlüftung geschaltet, so daß Druckluft aus der Kammer 4 über die Leitung 10, die Kammer 24 und das Ventilrohr 25 ins Freie strömen kann, bis der Druck in dem Druckraum 4 sich derart erniedrigt hat, daß die in Richtung der Pfeile 17 und 18 auf den Stößel einwirkenden, einander entgegengerichteten Kräfte wieder in Gleichgewicht miteinander sind, so daß das Schaltglied 6 unter der Wirkung der Feder 16 wieder in seine Ausgangsstellung zurückschwenken kann, in der beide Auslaßventile also auch das Auslaßventil 13 wieder geschlossen sind. Bei geschlossenem Auslaßventil 13 steigt nun aber der Druck in der Kammer 20 durch die Belüftung über die Leitung 39 und die Leitungsabzweigung 40 mit der eingeschalteten Düse 42 bis zur Höhe des Druckes in der Kammer 21 an. Dabei wird im gleichen Maße das Ventilrohr 23 über die Membran 22 wieder soweit angehoben, bis der innere Ventilsitz 25 des Doppelventilsitzes 29 in Abschlußstellung befindet, wodurch die weitere Entlüftung des Druckraumes 4 unterbrochen wird. Die Drucksignaländerung am Ausgang 30 ist umgekehrt proportional der Stromänderung an den Anschlußklemmen 1' des Elektromagneten 1.

Sinkt der Steuerstrom an den Anschlußklemmen des Elektromagneten, so überwiegt momentan die Wirkung des Druckes in dem Druckraum 9 gegenüber der auf den Anker wirkenden Magnetkraft des Magneten ein. Der Stößel 1 bewegt sich dementsprechend nach oben, so daß die Kraft der Feder 16, unterstützt von dem, auf die Membran 8 wirkenden Druck in dem Druckraum 9, das Schaltglied 6 nach oben drücken kann, das um die Kugel 15 des geschlossenen Auslaßventils 13 schwenkt und dabei die Kugel 14 des Auslaßventils 12 freigibt. Damit vermag Luft aus der Kammer 21 über das offene Auslaßventil 12 abzuströmen, die nicht rasch genug über die Leitung 39 und die Leitungsabzweigung 41 mit der eingeschalteten Düse 43 nachgefördert werden kann, so daß ein Druckungleichgewicht in den Kammern 21 und 22 der Ventileinrichtung entsteht, mit der Folge, daß das Ventilrohr 23 über die Membran 22 angehoben wird. Hierdurch wird die Ventilplatte 27 bei weiterhin geschlossen gehaltenen, inneren Ventilsitz 25 von dem äußeren Ventilsitz 26 abgehoben. Die Ventileinrichtung 19 befindet sich damit in einer Füllstellung, in der Luft aus der Kammer 31' über die Kammer 24 und die Leitung 10 in den Druckraum 4 gefördert wird, bis wiederum Gleichgewicht zwischen den in Richtung der Pfeile 17 und 18 auf den Stößel in einander entgegengesetzten Richtungen wirkenden Kräften besteht, als dessen Folge das Schaltglied unter der Kraft der Feder 16 in seiner Ausgangslage zurückgeht, in der beide Auslaßventile 12 und 13 geschlossen gehalten sind.

Mit Abschluß des Auslaßventils 12 erhöht sich der Druck in dem Druckraum 21 durch die Belüftung über die Leitung 39 und die Leitungsabzweigung 41 mit der eingeschalteten Düse 43. Im gleichen Maße wird das Ventilrohr 23 über die Membran 22 nach unten bewegt. Bei Druckgleichgewicht in den Kammern 20 und 21 befindet sich das Doppelsitzventil 29 mit seinen beiden Ventilsitzen wieder in der Abschlußstellung und am Ausgang 30 erscheint ein erhöhtes Drucksignal entsprechend dem erniedrigten Stromwert an den Anschlußklemmen 1' des Elektromagneten ein.

Über das Auslaßventil 12 oder 13 strömt nur kurzzeitig während des Regelvorganges Luft in die Umgebung. Um den Luftverbrauch weiter zu reduzieren, werden die Kammern 20 und 21 mit einem vom Druckminderventil 35 erhaltenen niedrigen Druck aus der Leitung 39 über die Leitungsabzweigungen 40 und 41 mit den Düsen 42 und 43 gespeist. Der Druckraum 9 mit der Membran 8 ist z. B. vorgesehen, um den elektropneumatischen Wandler zusätzlich mit dem von einer elektrodynamischen Bremswirkung abhängigen Druck speisen und dadurch die pneumatische Bremse zur Ergänzung der elektrodynamischen Bremse verwenden zu können. Es ist klar, daß der gewählte Druck in dem Druckraum 9 durch eine entsprechende Federkraft ersetzt werden kann.

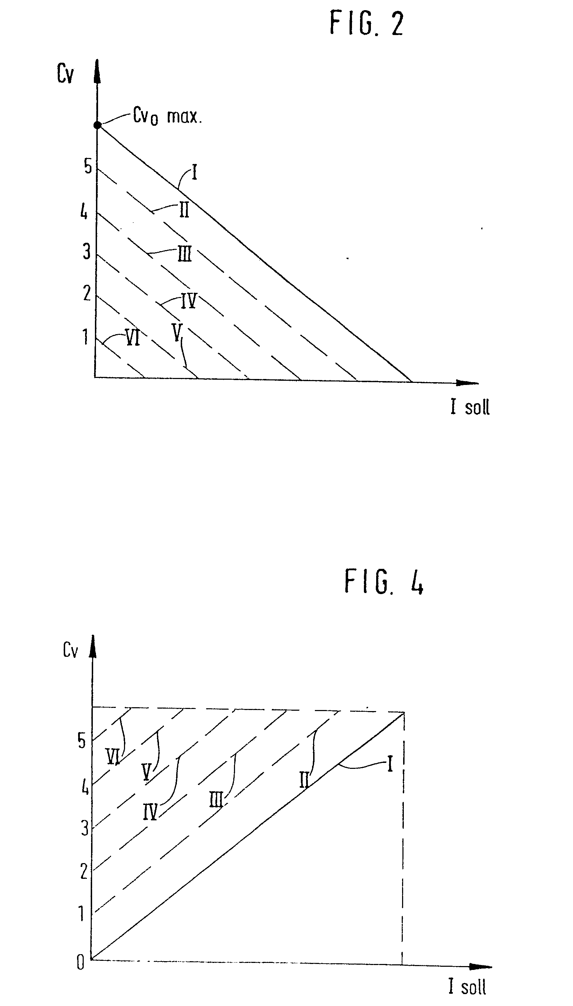

Fig. 2 zeigt in Abhängigkeit von der gewählten Höhe des Druckes (Vorsteuerdruckes $Cv_0$) in dem Druckraum 9 parallele Kennlinien I bis VI für den Ausgangsdruck Cv in der Ausgangsleitung 30 in Abhängigkeit von der Höhe des Stromes $I_{soll}$ an den Anschlußklemmen 1' des Magneten.

Bei einem maximalen Vorsteuerdruck $Cv_0$ max ergibt sich die ausgezogene Kennlinie I in Fig. 2. Mit kleiner werdendem Vorsteuerdruck $Cv_0$ gleich 5 bis 1 verschieben sich die Kennlinien II—VI parallel zu der Kennlinie I wie es dem Diagramm in Fig. 2 zu entnehmen ist.

Wird der Druckraum 9 mit einem konstanten maximalen Druck $Cv_0$ max gespeist, so wird bereits ohne Magnetkraft in dem Druckraum 4 ein entsprechend hoher Druck gebildet, der in die Leitung 30 ein Druckausgangssignal Cv abgibt. Wird an dem Magneten 1 ein Strom $I_{soll}$ angelegt, so überwindet die Magnetkraft zum Teil oder ganz die Druckkraft in dem Druckraum 9, d. h. der ausgesteuerte Druck Cv sinkt mit der Zunahme des Steuersignals. Wird der Druckraum 9 mit der Wirkung der elektropneumatischen Bremse umgekehrt proportionalen Druck gespeist, so arbeitet der E/P-Wandler als sogenanntes Blending-Ventil.

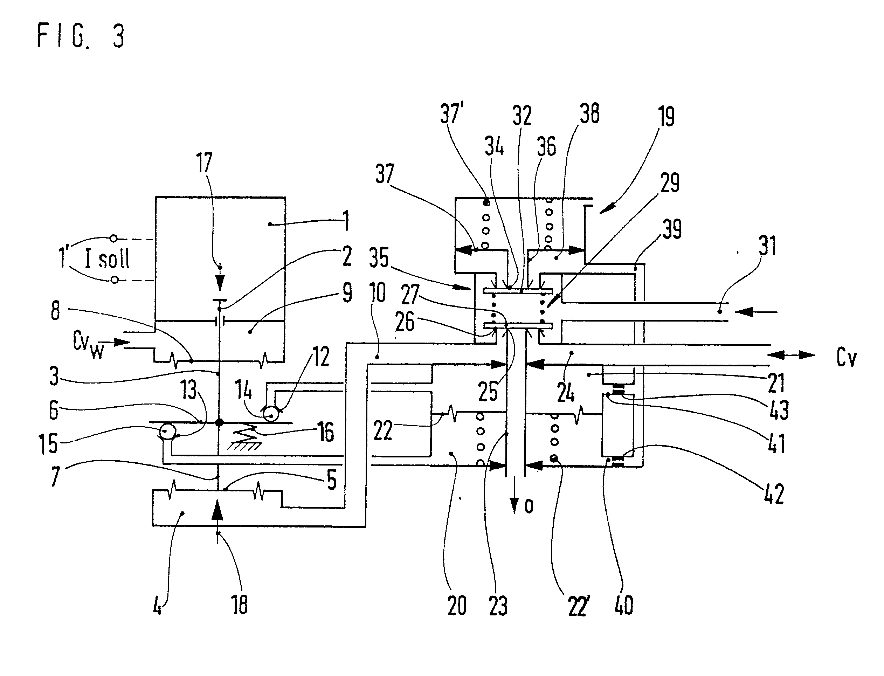

Fig. 3 zeigt einen erfindungsgemäßen E/P-Wandler, ähnlich dem in Fig. 1. Der E/P-Wandler in Fig. 3 ist beispielsweise für eine Federspeicherbremse bestimmt. Gleiche Bezugszeichen in den Fig. 1 und 3 betreffen gleiche Teile. Der wesentliche Unterschied gegenüber dem E/P-Wandler nach Fig. 1 besteht darin, daß der Vorsteuerdruck 9 in Fig. 1 an die pneumatische Leitung 10 angeschlossen ist, während der Druckraum 4 am Elektromagneten 1 an die Vorsteuerdruckleitung 11 angeschlossen ist und daß die Kammer 20 der Ventileinrichtung 19 an das Auslaßventil 12 und die Kammer 21 an das Auslaßventil 13 angeschlossen ist.

Die Wirkungsweise des E/P-Wandlers beispielsweise für eine Federspeicherbremse ist somit ähnlich dem E/P-Wandler nach Fig. 1 beispielsweise für eine Druckluftbremse.

In Fig. 3 ist der Druckraum 4 mit der Membran 5 vorgesehen, um den Wandler zusätzlich z. B. mit dem von der elektromagnetischen Bremswirkung abhängigen Druck $Cv_W$ zu speisen und dadurch die pneumatische Bremse zur Ergänzung der elektrodynamischen Bremse (Blending) verwenden zu können.

Fig. 4 zeigt in Abhängigkeit von der gewählten Höhe des Druckes in dem Druckraum 4 (Vorsteuerdruck $Cv_W$) parallele Kennlinien I bis VI für den Ausgangsdruck Cv in der Ausgangsleitung 30 in Abhängigkeit von der Höhe des Stromes $I_{soll}$ an den Anschlußklemmen 1' des Magneten 1. Bei einem Vorsteuerdruck $Cv_W$ gleich 0 geht die dick ausgezogene Kennlinie I durch den Nullpunkt des Koordinatennetzes. Mit steigendem Vorsteuerdruck $Cv_W$ gleich 1—5 verschieben sich die Kennlinien II—VI parallel zu der Kennlinie I wie in Fig. 4 dargestellt.

In Fig. 1 und 3 ist die Membran 22 bzw. ein entsprechender Kolben von einer Feder 22' belastet, die sich in der Kammer 20 befindet und für ein luftdichtes Abschließen des Entlüftungssitzes 25 sorgt, wenn in den Kammern 20 und 21 der gleiche Druck herrscht.

## Patentansprüche

1. Elektropneumatischer Wandler mit einem pneumatischen Druckraum (4), einer den Druck in dem Druckraum (4) überwachenden Ventileinrichtung (12, 13) und einem Elektromagneten (1), auf dessen Anker (2) eine elektromagnetische Kraft einwirkt, die im Gleichgewicht mit einem der Kraft entsprechenden Druck in dem Druckraum (4) den Anker (2) in eine Nullstellung einzustellen vermag, wobei die Ankerbewegung aus dieser Nullstellung heraus die Ventileinrichtung (12, 13) zur Druckerniedrigung bzw. Druckerhöhung des Druckes in dem Druckraum (4) entsprechend der jeweiligen elektromagnetischen Kraft steuert, dadurch gekennzeichnet, daß die Ventileinrichtung aus zwei Auslaßventilen (12, 13) in Verbindung mit einem Steuerventil (19) besteht, das zwei je mit einem der Auslaßventile in Verbindung stehenden Druckkammern (20, 21) enthält, wobei die Druckdifferenz zwischen den beiden Druckkammern den Druck in dem Druckraum (4) steuert, und wobei das Steuerventil (19) beim Öffnen des einen Auslaßventils (13) den Druck in dem Druckraum (4) vermindert und beim Öffnen des anderen Auslaßventils (12) den Druck in dem Druckraum (4) erhöht, daß in der Nullstellung sich beide Auslaßventile (12, 13) sowie das Steuerventil (19) in Abschlußstellungen befinden, und daß außerhalb der Nullstellung, je nach dem, ob die elektromagnetische oder pneumatische Kraft überwiegt, das eine oder andere Auslaßventil (12 oder 13) geöffnet ist.

2. Wandler nach Anspruch 1, dadurch gekennzeichnet, daß der Anker (2) sich über einen Stößel (3) auf einem Schaltglied (6) abstützt, das im Zusammenwirken mit mindestens einer Feder (16) nur eines (13) der beiden Auslaßventile (12, 13) abschließt, während das andere Ventil (12) geöffnet ist, oder beide Auslaßventile (12 und 13) gleichzeitig abschließt.

3. Wandler nach Anspruch 1, dadurch gekennzeichnet, daß das Schaltglied (6) im wesentlichen balkenartig ausgebildet und den Stößel (3) überkreuzend angeordnet ist.

4. Wandler nach Anspruch 1, dadurch gekennzeichnet, daß zur einen Seite des Schaltgliedes (6) das eine Auslaßventil (12) und zur anderen Seite des Schaltgliedes (6) das andere Auslaßventil (13) angeordnet ist, daß die beiden Auslaßventile (12 und 13) axiale Abstände von dem Stößel (3) aufweisen, wobei die Achse durch den Stößel (3) zwischen den beiden Auslaßventilen (12 und 13) verläuft, daß beide Auslaßventile (12 und 13) bezogen auf die maximale Verschieblichkeit des Stößels (3) und die Bewegung des Schaltgliedes (6) fest angeordnet sind, daß das Schaltglied (6) von wenigstens einer Feder (16) belastet ist, die in der Nullstellung des Ankers (2) das Schaltglied (6) gegenüber beiden Ventilsitzen in Abschlußstellung hält, und daß außerhalb der Nullstellung das Schaltglied (6) um einen der beiden Ventilsitze verschwenkt ist, wobei jeweils der als Schwenkpunkt dienende Ventilsitz des einen Ventils (12 oder 13) geschlossen und der Ventilsitz des anderen Ventils (13 oder 12) bis zu erneuten Einstellung eines Kräftegleichgewichtes geöffnet ist.

5. Wandler nach Anspruch 3 oder 4, dadurch gekennzeichnet, daß das Schaltglied (6) den Stößel (3) im wesentlichen rechtwinklig überkreuzt, daß die Achsrichtungen der beiden Auslaßventile (12 und 13) und des Stößels (3) im wesentlichen parallel nebeneinander verlaufen und daß die Feder (16) als Zug- oder Druckfeder ausgebildet ist, die seitlich des Stößels (3) parallel zu dessen Achsrichtung am Schaltglied (6) angreift.

6. Wandler nach Anspruch 4 oder 5, dadurch gekennzeichnet, daß das Schaltglied (6) aus einer dünnen Scheibe besteht, die im Zentrum eine Öffnung aufweist, durch die der Stößel (3) greift, der sich mit einem Absatz auf dem Öffnungsrand abstützt.

7. Wandler nach einem der Ansprüche 2 bis 6, dadurch gekennzeichnet, daß das Ende des durch das Schaltglied (6) greifenden Stößels (3) sich auf einer pneumatischen oder mechanischen Feder (8, 9) abstützt.

8. Wandler nach einem der vorstehenden Ansprüche 1 bis 7 für eine Druckluftbremse, dadurch gekennzeichnet, daß der Druckraum (4) einseitig von einer Membran (5) abgeschlossen ist, und daß der Stößel (3) durch den Druckraum (4) und die Membran (5) druckdicht geführt und mit der Membran (5) fest verbunden ist (Fig. 1).

9. Wandler nach einem der vorstehenden Ansprüche 1 bis 7 für eine Federspeicherbremse, dadurch gekennzeichnet, daß das Ende des durch das Schaltglied (6) greifenden Stößels (3) mit der Membran (5) gekuppelt ist, die den Druckraum (4) überspannt (Fig. 3).

10. Wandler nach Anspruch 9, dadurch gekennzeichnet, daß ein mit einem Druck (Cv$_W$) beaufschlagter Raum (9) von einer weiteren Membran (8) abgeschlossen ist, und daß der Stößel (3) durch den Raum (9) und die weitere Membran (8) druckdicht geführt und mit der Membran (8) fest verbunden ist.

11. Wandler nach einem der Ansprüche 1 bis 10, dadurch gekennzeichnet, daß das Schaltglied (6) von mindestens einer Feder (16) belastet ist, die das Schaltglied (6) in der Nullstellung des Wandlers gegenüber beiden Ventilsitzen in der Abschlußstellung hält.

12. Wandler nach einem oder mehreren der vorstehenden Ansprüche, dadurch gekennzeichnet, daß eine Feder (16) vorgesehen ist, die außermittig am Schaltglied (6) angreift.

13. Wandler nach einem oder mehreren der vorstehenden Ansprüche, dadurch gekennzeichnet, daß die Auslaßventile (12, 13) Kugelventile (14, 15) sind.

14. Wandler nach Anspruch 1, dadurch gekennzeichnet, daß die Ventileinrichtung (19) aus einer zweisitzigen Ventilanordnung (29) besteht, die den Druckraum (4) entweder an eine Druckluftquelle (31) oder an Atmosphäre (O) anschließt oder gegenüber diesen Orten abschließt, daß das erste Ventil (12) an einen ersten Steuerraum (21) und das zweite Ventil (13) an einen zweiten Steuerraum (20) des Steuerventils (18) angeschlossen ist und die zweisitzige Ventilanordnung (29) von der Druckdifferenz der beiden Steuerräume (20, 21) gesteuert ist, und daß jeder der beiden Steuerräume (20, 21) über eine Düse (42, 43) an die Druckluftquelle (31) angeschlossen ist.

15. Wandler nach Anspruch 14, dadurch gekennzeichnet, daß zwischen der Druckluftquelle (31) und den beiden Steuerräumen (20, 21) ein Druckminderventil (35, 37, 37') geschaltet ist.

## Claims

1. Electropneumatic transducer with a pneumatic pressure space (4), a valve arrangement (12, 13) monitoring the pressure in the pressure space (4), and an electromagnet (1), the armature (2) of which is acted upon by an electromagnetic force which, balanced with a pressure in the pressure space (4) which corresponds to the force, can set the armature (2) to zero, the movement of the armature from this zero position controlling the valve arrangement (12, 13) in order to reduce or increase the pressure in the pressure space (4) in accordance with the respective electromagnetic force, characterised in that the valve arrangement consists of two outlet valves (12, 13) connected with a control valve (19) which contains two pressure chambers (20, 21) connected in each case with one of the outlet valves, the differences in pressure between the two pressure chambers controlling the pressure in the pressure space (4), and the control valve (19) reducing the pressure in the pressure space (4) when one outlet valve (13) is opened and increasing the pressure in the pressure space (4) when the other outlet valve (12) is opened, in that in the zero position both outlet valves (12, 13) and also the controll valve (19) are in closed positions, and in that out of the zero position, according to whether the electromagnetic or pneumatic force predominates, one or other of the outlet valves (12 or 13) is open.

2. Transducer according to claim 1, characterised in that the armature (2) is supported on a switching element (6) by way of a push rod (3), which switching element, cooperating with at least one spring (16), closes only one (13) of the two outlet valves (12, 13), while the other valve (12) is open, or closes both outlet valves (12 and 13) simultaneously.

3. Transducer according to claim 1, characterised in that the switching element (6) is substantially in the manner of a beam and is arranged so as to cross the push rod (3).

4. Transducer according to claim 1, characterised in that one outlet valve (12) is arranged on one side of the switching element (6) and the other outlet valve (13) is arranged on the other side of the switching element (6), in that both outlet valves (12 and 13) are axially distant from the push rod (3) axis extending through the push rod (3) between the two outlet valves (12 and 13), in that both outlet valves (12 and 13) are arranged fixedly relative to the maximum displaceability of the push rod (3) and to the movement of the switching element (6), in that the switching element (6) is loaded by at least one spring (16) which, in the zero position of the armature (2), holds the switching element (6) in the closed position relative to both valve seats, and in that out of the zero position the switching element (6) is swivelled about one of the two valve seats, in each case the valve seat, serving as pivot, of one valve (12 or 13) being closed and the valve seat of the other valve (13 or 12) being open until equilibrium of force is re-established.

5. Transducer according to claim 3 or 4, characterised in that the switching element (6) crosses the push rod (3) substantially at right angles thereto, in that the axial directions of both outlet valves (12 and 13) and of the push rod (3) extend substantially in parallel with each other, and in that the spring (16) is a tension or pressure spring which acts upon the switching element (6) at the side of the push rod (3) and in parallel with its axial direction.

6. Transducer according to claim 4 or 5, characterised in that the switching element (6) consists of a thin disc having in its centre an aperture through which the (3), supported by a shoulder on the edge of the aperture, engages.

7. Transducer according to one of claims 2 to 6, characterised in that the end of the push rod (3) engaging through the switching element (6) is supported on a pneumatic or mechanical spring (8, 9).

8. Transducer according to one of the preceding claims 1 to 7 for a compressed-air brake, characterised in that the pressure space (4) is closed on one side by a membrane (5), and in that the push rod (3) passes through the pressure space (4) and the membrane (5) in a pressure sealed manner and is fixedly connected with the membrane (5). (Fig. 1).

9. Transducer according to one of the preceding claims 1 to 7 for a spring-loaded brake, characterised in that the end of the push rod (3) engaging through the switching element (6) is coupled with the membrane (5) which covers the pressure space (4) (Fig. 5).

10. Transducer according to claim 9, characterised in that a space (9), which is acted upon by a pressure ($Cv_W$), is closed by a further membrane (8), and in that the push rod (3) passes through the space (9) and the further membrane (8) in a pressure sealed manner and is fixedly connected with the membrane (8).

11. Transducer according to one of claims 1 to 10, characterised in that the switching element (6) is loaded by at least one spring (16) which, in the zero position of the transducer, holds the switching element (6) in the closed position relative to both valve seats.

12. Transducer according to one or several of the preceding claims, characterised in that a spring (16) which acts excentrically on the switching element (6) is provided.

13. Transducer according to one or several of the preceding claims, characterised in that the outlet valves (12, 13) are ball valves (14, 15).

14. Transducer according to claim 1, characterised in that the valve arrangement (19) consists of a two-seated valve arrangement (29) which connects the pressure space (4) either to a compressed air source (31) or to the atmosphere (0), or closes it to these, in that the first valve (12) is connected to a first control space (21) and the second valve (13) is connected to a second control space (20) of the control valve (18), and the two-seated valve arrangement (29) is controlled by the pressure difference of the two control spaces (20, 21), and in that each of the two control spaces (20, 21) is connected by way of a nozzle (42, 43) to the compressed air source (31).

15. Transducer according to claim 14, characterised in that a pressure reducing valve (35, 37, 37') is connected between the compressed air source (31) and the two control spaces (20, 21).

**Revendications**

1. Transducteur électro-pneumatique, avec une chambre de pression pneumatique (4), un dispositif à soupapes (12, 13) contrôlant la pression qui règne dans la chambre de pression (4), et un électro-aimant (1) sur l'armature (2) duquel agit une force électro-pneumatique et qui en équilibre avec une pression dans la chambre de pression (4), correspondant à la force, est capable d'ajuster l'armature (2) dans sa position zéro, le déplacement de l'armature hors de cette position zéro, contrôlant le dispositif à soupapes (12, 13) en vue d'une réduction ou d'un accroissement de la pression qui règne dans la chambre de pression (4), en fonction de la force électromagnétique, caractérisé par le fait que le dispositif à soupapes (12, 13) est constitué par deux soupapes d'évacuation (12, 13), en liaison avec une soupape de commande (19) qui comporte deux chambres de pression (20, 21) dont chacune est reliée avec l'une des soupapes d'évacuation, la différence de pression entre les deux pressions contrôlant la pression dans la chambre de pression (4) et la soupape de commande (19) réduisant la pression dans la chambre de pression (4) lors de l'ouverture de l'une (13) des soupapes d'évacuation et augmentant la pression dans la chambre de pression (4) lors de l'ouverture de l'autre (12) des soupapes d'évacuation, que dans la position zéro, les deux soupapes d'évacuation (12, 13) ainsi que la soupape de commande (19) se trouvent dans leur position de fermeture, et, qu'en-dehors de la position zéro et selon que prédomine la force électromagnétique ou la force pneumatique, l'une ou l'autre des soupapes d'évacuation (12 ou 13) est ouverte.

2. Transducteur selon la revendication 1, caractérisé par le fait que l'armature prend appui, par l'intermédiaire d'un poussoir (3), sur un élément de commutation (6) qui, en coopération avec au moins un ressort, ne ferme que l'une (13) des deux soupapes d'évacuation (12, 13), alors que l'autre soupape (12) est ouverte, ou ferme simultanément les deux soupapes d'évacuation (12 et 13).

3. Transducteur selon la revendication 1, caractérisé par le fait que l'organe de commutation (6) est réalisé, essentiellement sous la forme d'une poutrelle, et est disposé de manière à croiser le poussoir (3).

4. Transducteur selon la revendication 1, caractérisé par le fait que sur un côté de l'élément de commutation (6) est disposée l'une (12) des soupapes d'évacuation et sur l'autre côté de l'élément de commutation (6) est disposée l'autre soupape d'évacuation (13), que les deux soupapes d'évacuation (12 et 13) sont à des distances axiales du poussoir (3), l'axe passant par le poussoir (3) se situant entre les deux soupapes d'évacuation (12 et 13), que les deux soupapes d'évacuation (12 et 13) sont, par rapport à la possibilité maximale de déplacement du poussoir (3) et par rapport au déplacement de l'élément de commutation (6), disposées de façon fixe, que l'élément de commutation (6) est chargé par au moins un ressort (16) qui, dans la position zéro de l'armature (2), maintient l'élément de commutation (6) en position de fermeture par rapport aux deux sièges de soupape, et qu'en-dehors de la position zero, l'élément de commutation est basculé autour de l'un des deux sièges de soupape, le siège de soupape de l'une (12 ou 13) des soupapes, qui sert de centre de basculement, est fermé alors que le siège de soupape de l'autre (13 ou 12) des soupapes est ouvert pour un nouveau réglage de l'équilibre des forces.

5. Transducteur selon la revendication 3 ou 4, caractérisé par le fait que l'élément de commutation (6) croise le poussoir (3) sensiblement suivant un angle droit, que les directions axiales des deux soupapes d'évacuation (12 et 13) et du poussoir (3) s'étendent sensiblement parallèlement les uns à côté des autres, et que le ressort (16) est réalisé sous la forme d'un ressort de traction ou de pression, et qui attaque l'élément de commutation (6) latéralement par rapport au poussoir (3) et parallèlement à la direction axiale de celui-ci.

6. Transducteur selon la revendication 4 ou 5, caractérisé par le fait que l'élément de commutation (6) est constitué par un disque mince qui présente, en son centre, une ouverture à travers laquelle passe le poussoir (3) qui prend appui, par un appendice, contre le bord de l'ouverture.

7. Transducteur selon l'une des revendications 2 à 6, caractérisé par le fait que l'extrémité du poussoir (3) qui passe par l'élément de commutation (6), prend appui sur un ressort pneumatique ou mécanique (8, 9).

8. Transducteur selon l'une des revendications précédentes 1 à 7, pour un frein à air comprimé, caractérisé par le fait que la chambre de pression (4) est fermée sur un côté par une membrane (5), et que le poussoir (3) est guidé, avec étanchéité à travers la chambre de pression (4) et la membrane (5) et est relié rigidement avec la membrane (5) (fig. 1).

9. Transducteur selon l'une des revendications précédentes 1 à 7, pour un frein à ressort à accumulation d'énergie, caractérisé par le fait que l'extrémité du poussoir (3) qui passe par l'élément de commutation (6), est accouplée à la membrane (5) qui s'étend à travers la chambre de pression (4) (fig. 3).

10. Transducteur selon la revendication 9, caractérisé par le fait qu'une chambre (9), qui est chargée par une pression ($C_{VW}$), est fermée par une seconde membrane (8), et que le poussoir (3) est guidé, avec étanchéité, à travers la chambre (9) et la seconde membrane (8) et est reliée à la membrane (8).

11. Transducteur selon l'une des revendications 1 à 10, caractérisé par le fait que l'élément de commutation (6) est chargé par au moins un ressort (16) qui maintient l'élément de commutation (6) dans la position zéro du transducteur, dans la position de fermeture par rapport aux deux sièges de soupape.

12. Transducteur selon l'une ou plusieurs des revendications précédentes, caractérisé par le fait qu'il est prévu un ressort (16) qui attaque l'élément de commutation (6) en dehors de son centre.

13. Transducteur selon l'une ou plusieurs des revendications précédentes, caractérisé par le fait que les soupapes d'évacuation (12, 13) sont les soupapes à billes (14, 15).

14. Transducteur selon la revendication 1, caractérisé par le fait que le dispositif à soupape (19) est constitué par un dispositif à soupape (29) à double siège, qui relie la chambre de pression (4) soit à une source d'air comprimé (31) ou à l'atmosphère ou le ferme par rapport à celles-ci, que la première soupape (12) est reliée à une première chambre de commande (21) et la seconde soupape (13) à une seconde chambre de commande (20) de la soupape de commande (18), le dispositif à soupape du siège (29) étant commandé par la différence de pression des deux chambres de commande (20, 21), et que chacune des deux chambres de commande (20, 21) est reliée, par l'intermédiaire d'une tuyère (42, 43), à la source d'air comprimé (31).

15. Transducteur selon la revendication 14, caractérisé par le fait qu'entre la source d'air comprimé (31) et les deux chambres de commande (20, 21), est prévue une soupape de réduction de pression (35, 37, 37').

# FIG.1

# FIG. 2

# FIG. 4

FIG. 3